# EUROPÄISCHE PATENTSCHRIFT

(11) **EP 3 638 528 B1**
(45) Veröffentlichungstag und Bekanntmachung des Hinweises auf die Patenterteilung: **24.03.2021**
(21) Anmeldenummer: 18728019.3
(22) Anmeldetag: 16.05.2018
(51) Int. Cl.: B60K 6/48, B60K 6/40, B60K 6/387

(54) **HYBRIDMODUL FÜR EINEN ANTRIEBSSTRANG EINES KRAFTFAHRZEUGS, HYBRID-EINHEIT UND VERFAHREN ZUR MONTAGE EINES HYBRIDMODULS**
HYBRID MODULE FOR A DRIVE TRAIN OF A MOTOR VEHICLE, HYBRID UNIT AND METHOD FOR ASSEMBLING A HYBRID MODULE
MODULE HYBRIDE POUR UNE CHAÎNE CINÉMATIQUE D'UN VÉHICULE AUTOMOBILE, UNITÉ HYBRIDE ET PROCÉDÉ DE MONTAGE D'UN MODULE HYBRIDE

(30) Priorität: 16.06.2017 DE 102017113242; 17.11.2017 DE 102017127102
(43) Veröffentlichungstag der Anmeldung: 22.04.2020
(73) Patentinhaber: Schaeffler Technologies AG & Co. KG, 91074 Herzogenaurach (DE)
(72) Erfinder: HUBER, Lionel, 67410 Drusenheim (FR); LEHMANN, Steffen, 76275 Ettlingen (DE); ORTMANN, Simon, 77815 Bühl (DE); DINGER, Christian, 77855 Achern (DE); VÖGTLE, Benjamin, 76137 Karlsruhe (DE); HOFSTETTER, Dirk, 76448 Durmersheim (DE); SIMONOV, Anton, 77815 Bühl (DE)
(86) Internationale Anmeldenummer: PCT/DE2018/100464
(87) Internationale Veröffentlichungsnummer: WO 2018/228638

(56) Entgegenhaltungen:
- WO-A1-2014/026685
- WO-A2-2008/064813
- FR-A1- 2 871 111
- JP-A- 2000 304 065

## Beschreibung

Die Erfindung betrifft ein Hybridmodul für einen Antriebsstrang eines Kraftfahrzeugs, eine Hybrid-Einheit mit dem erfindungsgemäßen Hybridmodul und ein Verfahren zur Montage eines erfindungsgemäßen Hybridmoduls.

Aus der FR 2 871 111 A1 ist ein aus mehreren Organen ausgebildeten Hybridmodul bekannt gemäß dem Oberbegriff des Anspruchs 1 bekannt.

Bezüglich weiteren Standes der Technik wird auf die WO 2008/064813 A2, die JP 2000 304065 A und die WO 2014/026685 A1 verwiesen.

Ferner sind Hybridmodule mit einer achsparallel zwischen einem Verbrennungsmotor und einem Getriebe angeordneten E- Maschine an sich aus dem allgemeinen Stand der Technik bekannt.

Gerade bei achsparallelen Hybridsystemen stellt sich das Problem, dass der Bauraum noch effizienter als bisher genutzt werden muss. Trotzdem ist es wünschenswert, dass ein Modul zwischen dem Getriebe und der Verbrennungskraftmaschine angeflanscht wird und für unterschiedlichste Motoren-Getriebe-Kombinationen einsetzbar ist.

Hiervon ausgehend liegt der vorliegenden Erfindung die Aufgabe zugrunde, die Nachteile aus dem Stand der Technik zu vermeiden oder gar komplett zu beseitigen, und insbesondere für achsparallele Hybridsysteme ein universell einsetzbares Modul vorzustellen, das den Bauraum vor allem in axialer Richtung besser nutzt und die Montage vereinfacht.

Diese Aufgabe wird erfindungsgemäß gelöst durch ein Hybridmodul mit den Merkmalen des Patentanspruchs 1, durch eine Hybrid-Einheit mit dem erfindungsgemäßen Hybridmodul nach Anspruch 8, sowie durch das Verfahren zur Montage eines Hybridmoduls nach Anspruch 10.

Vorteilhafte Ausgestaltungsformen des erfindungsgemäßen Hybridmoduls sind in den Unteransprüchen 2-7 angegeben. Eine vorteilhafte Ausgestaltungsform der erfindungsgemäßen Hybridmodul-Einheit ist im Unteranspruch 9 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft generell ein Hybridmodul mit einer ersten motorseitigen Vormontagegruppe und einer zweiten getriebeseitigen Vormontagegruppe, wobei zwischen der motorseitigen und der getriebeseitigen Vormontagegruppe eine Trennkupplung angeordnet ist, über die die Vormontagegruppen drehmomentübertragend verbindbar sind.

Das Hybridmodul weist eine motorseitige, Vormontagegruppe und eine getriebeseitige, zweite Vormontagegruppe auf, wobei die motorseitige Vormontagegruppe mit der motorseitigen Abtriebswelle eines Antriebsmotors, vorzugsweise eines Verbrennungsmotors, verbindbar ist, und die getriebeseitige Vormontagegruppe mit einer getriebeseitigen Antriebswelle verbindbar ist. Die Vormontagegruppen können über axiale Verbindungen, insbesondere über Schraubenverbindungen oder axiale Steckverzahnungen, zur Übertragung eines Drehmoments motor- bzw. getriebeseitig verbunden werden. Zwischen der motorseitigen und der getriebeseitigen Vormontagegruppe ist eine Trennkupplung angeordnet, über die die Vormontagegruppen drehmomentübertragend verbindbar sind.

Die motorseitige Vormontagegruppe besteht aus zumindest einem Drehschwingungstilger und einem ersten Lamellenkorb.

Die Trennkupplung ist als Lamellenkupplung ausgeführt. Die Lamellenkupplung weist einen ersten Lamellenkorb, der der motorseitigen Vormontagegruppe zugeordnet wird und einen zweiten Lamellenkorb, der der getriebeseitigen Vormontagegruppe zugeordnet wird, auf. Auf diese Weise kann eine schnelle und einfache Positionierung der Vormontagegruppen zueinander ermöglicht werden.

Insbesondere von Vorteil ist es, den motorseitigen Lamellenkorb als Außenlamellenkorb und den getriebeseitigen Lamellenkorb als Innenlamellenkorb auszuführen, wodurch einerseits genügend radialer Bauraum zur Anordnung eines Zentralausrückers zwischen Trennkupplung und der getriebeseitigen Antriebswelle zur Verfügung gestellt wird und andererseits der vorhandene axiale Bauraum optimal ausgenutzt werden kann. Auch wird dadurch ein einfacher Zusammenbau des Moduls ermöglicht.

In einer vorteilhaften Ausführungsform weist die getriebeseitige Vormontagegruppe einen Lamellenkorb auf, der über ein Stützlager gehäuseseitig gelagert ist und direkt mit der getriebeseitigen Antriebswelle verbunden werden kann.

In einer weiteren vorteilhaften Ausführungsform weist die getriebeseitige Vormontagegruppe einen Lamellenkorb mit Rad auf, wobei über das Rad die Anbindung der E-Maschine an den Antriebsstrang erfolgen kann.

In einer weiteren vorteilhaften Ausführungsform kann parallel zum Hybridmodul auch ein Klimakompressor mit der E-Maschine verbunden werden. Dies hat den Vorteil, dass eine Klimaanlage auch dann betrieben werden kann, wenn der Verbrennungsmotor gerade nicht läuft.

In einer weiteren vorteilhaften Ausführungsform erfolgt die Abdichtung der motorseitigen Vormontagegruppe über ein auf dem Kurbelwellengehäuse zentriertes Dichtblech und einen Dichtring. Der Dichtring ist so zwischen Dichtblech und Primärseite des Zweimassenschwungrades angeordnet, dass die Dichtlippen auf der Primärseite streifen. Dichtblech und Dichtring können auch als weitere Vormontagegruppe angesehen werden.

Es ist eine weitere Aufgabe der Erfindung, ein Verfahren zur Montage eines erfindungsgemäßen Hybridmoduls anzugeben.

Es wird dabei zur Verfügung gestellt:
- eine erste Vormontagegruppe bestehend aus einem Dichtblech und einem Dichtring,
- eine zweite motorseitige Vormontagegruppe mit zumindest einem Drehschwingungstilger und einem ersten Lamellenkorb und
- eine dritte getriebeseitige Vormontagegruppe mit einem Lamellenpaket, einem zweiten Lamellenkorb, einem Rad sowie einem Zentralausrücker und einem Modulgehäuse, wobei im Montagefall zunächst die erste Vormontagegruppe am Kurbelwellengehäuse zentriert wird, anschließend die zweite Vormontagegruppe mit der Abtriebswelle des Antriebsmotors verbunden wird und im letzten Schritt die dritte Vormontagegruppe auf die zweite Vormontagegruppe axial gesteckt und mit der ersten Vormontagegruppe verbunden wird.

Das bedeutet, dass in einem ersten Schritt die Vormontagegruppe aus Dichtblech und Dichtring motorseitig montiert und am Kurbelwellengehäuse zentriert wird. In einem zweiten Schritt wird die motorseitige Vormontagegruppe mit der Abtriebswelle des Antriebsmotors verbunden. In einem dritten Schritt wird die getriebeseitige Vormontagegruppe mit dem Dichtblech und dem Kurbelwellengehäuse, bzw. der motorseitigen Vormontagegruppe verbunden.

Nach erfolgter Montage der Module kann die erforderliche Menge an Schmieröl in das Hybridmodul eingefüllt werden. Des Weiteren kann das Zugmittelgetriebe angeordnet werden und der E-Motor in der Peripherie des Hybridmoduls angeordnet werden und an das Zugmittelgetriebe angeschlossen werden. Weiterhin kann ein Klimakompressor angeordnet werden und ebenfalls mit einem Zugmittelgetriebe an das Hybridmodul angeschlossen werden.

Die erfindungsgemäße Lehre bezüglich des Hybridmoduls sieht folgendes vor:
Es wird ein Hybridmodul mit einer ersten motorseitigen Vormontagegruppe und einer zweiten getriebeseitigen Vormontagegruppe zur Verfügung gestellt, wobei zwischen der motorseitigen Vormontagegruppe und der getriebeseitigen Vormontagegruppe eine Trennkupplung angeordnet ist, über die die Vormontagegruppen drehmomentübertragend verbindbar sind.

Es ist vorgesehen, dass die motorseitige Vormontagegruppe aus zumindest einem Drehschwingungstilger und einem ersten Lamellenkorb besteht.

Die getriebeseitige Vormontagegruppe besteht zumindest aus einem Lamellenpaket, einem zweiten Lamellenkorb, einem Rad sowie einem Zentralausrücker und einem Modulgehäuse. Das Rad ist dabei insbesondere als Kettenrad oder Riemenrad eines Zugmittelgetriebes ausgeführt, um derart von einer extern angeordneten elektrischen Maschine über das Zugmittelgetriebe ein Drehmoment in den zweiten Lamellenkorb eintragen zu können.
Insbesondere ist vorgesehen, dass die Trennkupplung als Lamellenkupplung ausgeführt ist.

In dieser Ausgestaltung sollte der motorseitige erste Lamellenkorb als Außenlamellenkorb und der getriebeseitige zweite Lamellenkorb als Innenlamellenkorb ausgeführt sein.

In einer weiteren vorteilhaften Ausführungsform ist vorgesehen, dass das Hybridmodul ein Stützlager aufweist und der zweite Lamellenkorb an dem Stützlager gehäuseseitig gelagert ist und direkt mit einer getriebeseitigen Antriebswelle drehfest verbindbar ist. Das Stützlager stützt dabei die radial äußere Seite des zweiten Lamellenkorbs ab. Dabei ist das Stützlager an einer radial inneren Seite eines Gehäuses angeordnet. Die drehfeste Anbindung des zweiten Lamellenkorbs an die Antriebswelle erfolgt vorzugsweise mittels einer Steckverzahnung.

In einer weiteren vorteilhaften Ausgestaltung des Hybridmoduls ist vorgesehen, dass der getriebeseitige zweite Lamellenkorb das Rad aufweist, über das die Anbindung einer E-Maschine an den Antriebsstrang realisierbar ist. Das bedeutet, dass das Rad vorzugsweise ein integraler Bestandteil des zweiten Lamellenkorbs ist.
Aufgrund dessen, dass der zweite Lamellenkorb vorzugsweise durch das Stützlager an einem Gehäuse des Hybridmoduls abgestützt ist, ist somit indirekt auch das Rad für das Zugmittelgetriebe am Gehäuse abgestützt. Der zweite Lamellenkorb ist dabei derart ausgestaltet, dass er formschlüssig drehfest auf einer Abtriebswelle, die zum Beispiel die Eingangswelle eines Getriebes oder auch eines Wandlers sein kann, aufnehmbar ist. Demzufolge wird ein in das Rad am zweiten Lamellenkorb eingetragenes Drehmoment über den zweiten Lamellenkorb direkt auf die Abtriebswelle übertragen.

Das Modulgehäuse ist vorzugsweise derart ausgestaltet, dass es ein radial inneres Gehäuseteil und ein radial äußeres Gehäuseteil umfasst, die mechanisch, insbesondere mittels mehrerer Schraubverbindungen, miteinander verbunden sind, wobei sich das radial innere Gehäuseteil an dessen radialer Innenseite am Stützlager abstützt und das radial äußere Gehäuseteil dazu eingerichtet ist, mittels wenigstens einer mechanischen Verbindung, insbesondere einer Schraubenverbindung, mit einer externen Einrichtung, wie zum Beispiel einem Kurbelwellengehäuse der Verbrennungskraftmaschine, verbunden zu werden.

Die mechanische Verbindung des radial inneren Gehäuseteils und des radial äußeren Gehäuseteils erfolgt dabei an der radial äußeren Seite des radial inneren Gehäuseteils und der radial inneren Seite des radial äußeren Gehäuseteils. Die mechanische Verbindung zur Fixierung des radial äußeren Gehäuseteils ist vorzugsweise ebenfalls eine Schraubverbindung.

Die Teilung des Gehäuses in zwei Gehäuseteile ermöglicht eine optimale Ausnutzung des Bauraums sowie eine flexible Montage.

Das radial innere Gehäuseteil ist vorzugsweise aus einem Stahl hergestellt, und das radial äußere Gehäuseteil ist vorzugsweise aus einem Aluminium-Gusswerkstoff hergestellt. Der Vorteil von Stahl als Werkstoff des radial inneren Gehäuseteils ist die höhere Temperaturbeständigkeit aufgrund reibungsbedingter Erwärmung des mit dem radial inneren Gehäuseteil verbundenen Stützlagers. Der Vorteil eines Aluminium-Gusswerkstoffes für das radial äußere Gehäuseteil ist das geringere Gewicht gegenüber Stahl. Zwischen dem radial inneren Gehäuseteil und dem radial äußeren Gehäuseteil ist zwecks Abdichtung ein Dichtungselement, vorzugsweise ein erster O-Ring vorgesehen.

Weiterhin ist vorzugsweise vorgesehen, dass durch das radial äußere Gehäuseteil und durch das radial innere Gehäuseteil wenigstens ein Strömungskanal ausgebildet ist, durch den ein Fluid einer vom Hybridmodul umfassten Kupplungs-Betätigungseinrichtung, insbesondere einem Zentralausrücker, zwecks deren Betätigung zuführbar ist.

Dieser Strömungskanal ist vorzugsweise zwischen mechanischen Befestigungseinrichtungen zur mechanischen Befestigung der beiden Gehäuseteile vorgesehen. Im Bereich des Überganges zwischen dem äußeren Gehäuseteil und dem inneren Gehäuseteil ist vorzugsweise eine Buchse in einer Querbohrung angeordnet, um eine Abdichtung zu gewährleisten. Diese Buchse kann zusätzlich durch einen zweiten O-Ring gegenüber dem radial äußeren Gehäuseteil abgedichtet sein, wobei dieser zweite O-Ring derart angeordnet sein kann, dass er auch eine Dichtungswirkung gegenüber dem radial inneren Gehäuseteil erfüllt.

Zur Vereinfachung der Herstellung des radial inneren Gehäuseteils bzw. dessen Abschnitts des Strömungskanals ist vorgesehen, dass der Strömungskanal im inneren Gehäuseteil an der radial äußeren Seite des Gehäuseteils mündet und dort mit einem Stopfen, gegebenenfalls ebenfalls aus Stahl ausgeführt, verschlossen ist. Dieser Stopfen bewirkt aufgrund seiner im Verschlusszustand realisierten elastischen Rückstellkraft eine abdichtende Wirkung des radial äußeren Bereichs des Strömungskanals im radial inneren Gehäuseteil.

Ein weiterer Aspekt der Erfindung ist eine Hybrid-Einheit, umfassend ein erfindungsgemäßes Hybridmodul sowie achsparallel zur Drehachse des Hybridmoduls eine E-Maschine und einen Klimakompressor, der mechanisch mit der E-Maschine verbunden ist. Die E-Maschine ist über ein Zugmittelgetriebe mit dem Rad des zweiten Lamellenkorbs im Wesentlichen rotationsfest verbunden.

Derart lässt sich die radiale Toleranzkette zum Kettenrad reduzieren und demzufolge die Laufruhe verbessern, wobei das Stützlager ausreichend stabil ausgestaltet ist, um die von dem Zugmittelgetriebe und/oder der Trennkupplung eingetragene Belastung auszuhalten.

Die mechanische Verbindung der E-Maschine mit dem Klimakompressor ist vorzugsweise ebenfalls über ein Zugmittelgetriebe realisiert, sodass ein an der E-Maschine anliegendes bzw. von dieser realisiertes Drehmoment auf den Klimakompressor übertragen werden kann.

Weiterhin kann die Hybrid-Einheit eine Verbrennungskraftmaschine umfassen, welche ein Kurbelwellengehäuse aufweist und zur motorseitigen Abdichtung des Hybridmoduls ein am Kurbelwellengehäuse zentriertes Dichtblech mit Dichtring vorgesehen ist.

Das erfindungsgemäße Verfahren zur Montage eines Hybridmoduls umfasst die folgenden Schritte:
- es wird eine erste Vormontagegruppe, bestehend zumindest aus einem Dichtblech und einem Dichtring, zur Verfügung gestellt,
- es wird eine zweite motorseitige Vormontagegruppe mit zumindest einem Drehschwingungstilger und einem ersten Lamellenkorb zur Verfügung gestellt, und
- es wird eine dritte getriebeseitige Vormontagegruppe mit einem Lamellenpaket, einem zweiten Lamellenkorb, einem Rad sowie einem Zentralausrücker und einem Modulgehäuse zur Verfügung gestellt,
wobei im Montagefall zunächst die erste Vormontagegruppe am Kurbelwellengehäuse zentriert wird, anschließend die zweite Vormontagegruppe mit der Abtriebswelle des Antriebsmotors verbunden wird und im letzten Schritt die dritte Vormontagegruppe auf die zweite Vormontagegruppe axial gesteckt und mit der ersten Vormontagegruppe verbunden wird.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1: eine Schnittdarstellung des Hybridmoduls;
- Fig. 2: den ersten Montageschritt des Hybridmoduls;
- Fig. 3: den zweiten Montageschritt des Hybridmoduls;
- Fig. 4: den dritten Montageschritt des Hybridmoduls;
- Fig. 5: eine schematische Anordnung von Hybridmodul, E-Maschine und Klimakompressor in einer erfindungsgemäßen Hybrid-Einheit; und
- Fig. 6: den in Figur 4 angedeuteten Ausschnitt A in vergrößerter Ansicht.

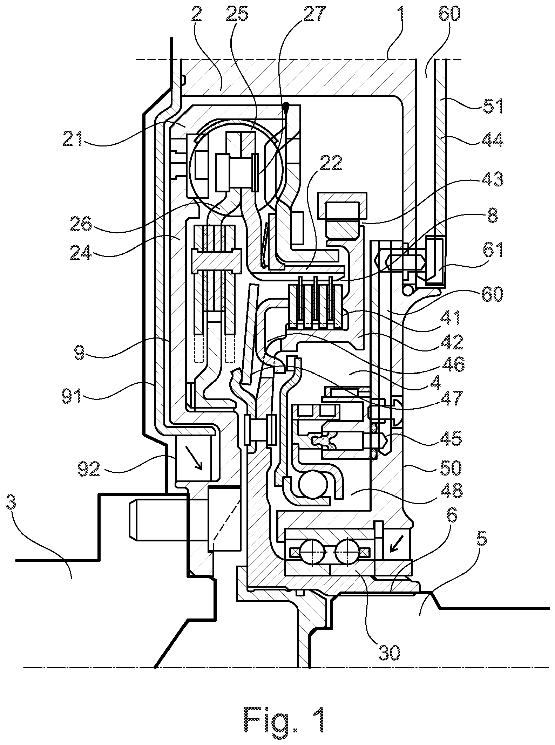

In Figur 1 ist ein erfindungsgemäßes Hybridmodul 1 dargestellt. Die motorseitige Vormontagegruppe 2 besteht zumindest aus einem Drehschwingungstilger 21, vorzugsweise ein Zweimassenschwungrad, bestehend aus einer Primärseite, einer Sekundärseite und die Primär- und Sekundärseite verbindenden Bogenfedern, und einem ersten Lamellenkorb 22. Vorzugsweise ist an der Sekundärseite des Zweimassenschwungrads ein Fliehkraftpendel 24 angeordnet. Die Primärseite des Drehschwingungstilgers 21 bzw. Zweimassenschwungrads ist einerseits mit der Abtriebswelle 3 des Antriebsmotors und andererseits über Bogenfedern 25 mit der Sekundärseite des Zweimassenschwungrads verbunden. An der Sekundärseite ist ein als Blechbauteil ausgeführter außenliegender erster Lamellenkorb 22 angeordnet. An einem zweiten, sich an der Primärseite abstützenden, sekundärseitigen Blechbauteil 26 können zusätzlich Fliehkraftpendel 24 angeordnet werden, wobei das erste und zweite Blechbauteil bevorzugt durch Nieten 27 miteinander verbindbar sind.

Die getriebeseitige Vormontagegruppe 4, bestehend aus zumindest einem Lamellenpaket 41, einem zweiten Lamellenkorb 42, einem Rad 43 sowie einem Zentralausrücker und einem Modulgehäuse 44, ist über das zwischen dem ersten und zweiten Lamellenkorb 22,42 liegende Lamellenpaket 41 an der motorseitigen Vormontagegruppe 2 angebunden. Der zweite Lamellenkorb 42 ist direkt mit der Getriebeeingangswelle 5 über eine axiale Steckverzahnung 6 verbunden. Am Lamellenkorb 42 selbst ist ein Rad 43 zur Anbindung der nicht in der Figur dargestellten E-Maschine 7 an den Antriebsstrang vorgesehen.

Zur Betätigung der vorzugsweise als "normally closed" ausgeführten Trennkupplung 8, bestehend aus einem motorseitigen Lamellenkorb 22, Lamellenpaket 41 und getriebeseitigen Lamellenkorb 42, ist ein am Modulgehäuse 44 angeordneter Zentralausrücker 45 vorgesehen. Im geschlossenen Zustand wird das Lamellenpaket 41 über einen Betätigungshebel 46 und ein sich am Lamellenkorb abstützendes elastisches Haltemittel 47, vorzugsweise eine Tellerfeder, gegen den getriebeseitigen Lamellenkorb 42 gespannt. Im Betätigungsfall des Zentralausrückers 45 wird über ein Ausrücklager 48 der Betätigungshebel 46 entgegen der Schließstellung der Trennkupplung 8 verschoben und so der Kraftfluss unterbrochen.

Die Schmierung der Komponenten kann mittels Ölbad erfolgen. Zur motorseitigen Abdichtung des Hybridmoduls ist daher eine dritte Vormontagegruppe 9, bestehend aus einem Dichtblech 91 und einem Dichtring 92 vorgesehen, wobei das Dichtblech 91 am Kurbelwellengehäuse 10 zentriert ist. Der Dichtring 92 ist so zwischen Dichtblech 91 und der Primärseite des Zweimassenschwungrads angeordnet, dass die Dichtlippen an der Primärseite streifen. Die Anbindung vom Modulgehäuse 44 an das Dichtblech 91 kann mittels Schraubenverbindung 93 erfolgen.
Das Modulgehäuse 44 umfasst ein radial inneres Gehäuseteil 50 und ein radial äußeres Gehäuseteil 51, die über mechanische Befestigungseinrichtungen 61, insbesondere Schraubverbindungen, mechanisch miteinander verbunden sind. Das radial innere Gehäuseteil 50 ist vorzugsweise aus einem Stahlwerkstoff hergestellt und stützt sich mit seiner radialen Innenseite am Stützlager 30 ab. Das radial äußere Gehäuseteil 51 ist vorzugsweise aus einem Aluminium-Gusswerkstoff hergestellt. Zwischen einzelnen mechanischen Befestigungseinrichtungen 61 ist wenigstens ein Strömungskanal 60 durch beide Gehäuseteile 50,51 ausgebildet, der zum Zentralausrücker 45 führt und diesen mit einem Druck-Fluid versorgen kann.

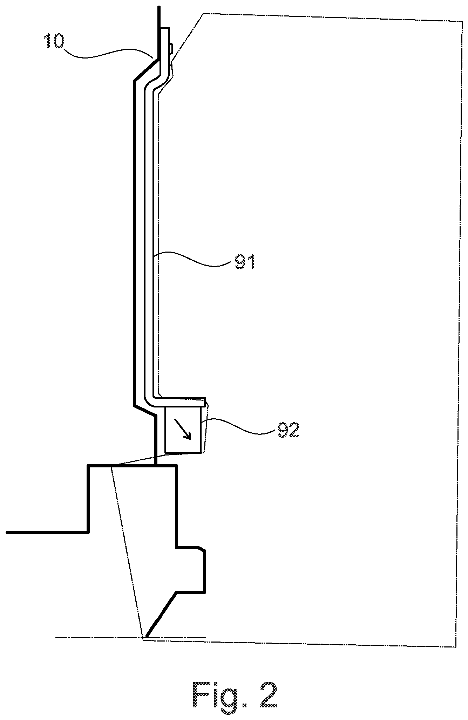

Figur 2 zeigt einen ersten Montageschritt des Hybridmoduls. In diesem wird das als dritte Vormontagegruppe 9 definierte Dichtblech 91 mit innenliegendem Dichtring 92 am Kurbelwellengehäuse 10 zentriert.

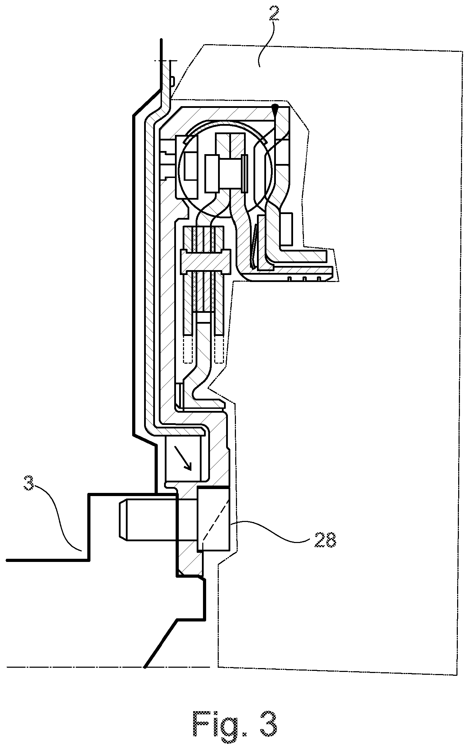

Der zweite Montageschritt ist in Figur 3 beschrieben. Die motorseitige Vormontagegruppe 2 wird axial auf die Abtriebswelle 3 des Antriebsmotors gesteckt, radial über die Abtriebswelle 3 zentriert und über Schraubenverbindungen 28 mit dieser verbunden.

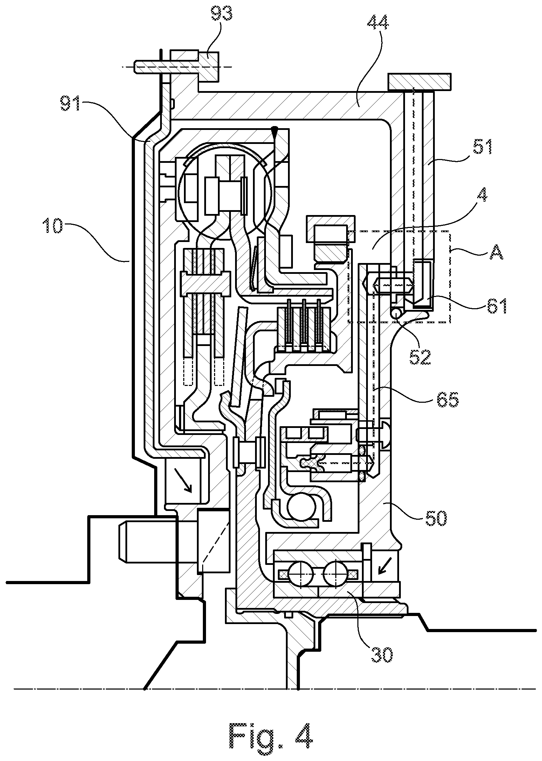

Wie in Figur 4 gezeigt, wird abschließend die getriebeseitige Vormontagegruppe 4 axial auf die bereits montierte motorseitige Vormontagegruppe 2 gesteckt und das Modulgehäuse 44 mit dem Dichtblech 91 und dem Kurbelwellengehäuse 10 verschraubt. In Figur 4 ist weiterhin erkennbar, dass das radial äußere Gehäuseteil 51 mit einer Schraubenverbindung 93 an das Kurbelwellengehäuse 10 eines hier nicht detailliert dargestellten Verbrennungsmotors angeschlossen ist.

Des Weiteren ist in Figur 4 der Ausschnitt A im Bereich des Übergangs zwischen dem radial inneren Gehäuseteil 50 und dem radial äußeren Gehäuseteil 51 angedeutet. In Figur 4 ist außerdem der Strömungspfad 65 des dem Zentralausrücker 45 zugeführten Fluids durch den Strömungskanal 60 dargestellt.

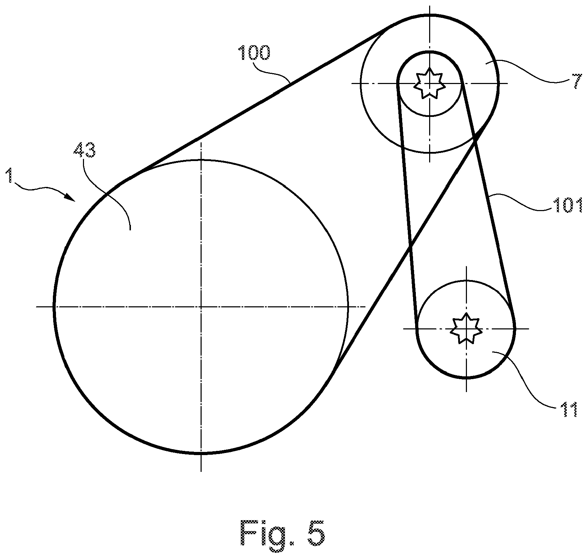

In Figur 5 ist die Anordnung von Hybridmodul 1, E-Maschine 7 und Klimakompressor 11 zueinander in einem Hybrid-System zu erkennen. Es ist ersichtlich, dass das erste Zugmittel 100 das Rad 43 des Hybridmoduls 1 umschlingt. Parallel zur Anordnung des ersten Zugmittels 100 zwischen Hybridmodul 1 und E-Maschine 7 ist ein weiteres, zweites Zugmittel 101 zwischen E-Maschine 7 und Klimakompressor 11 vorgesehen, wodurch auch ein Betreiben des Klimakompressors bei Stillstand des Antriebsmotors mittels der E-Maschine 7 ermöglicht wird.

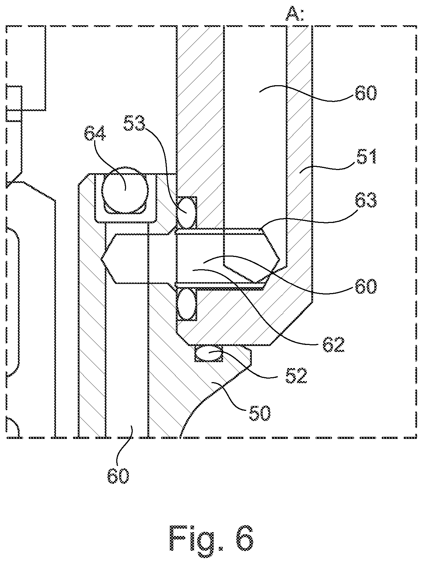

Figur 6 zeigt den in Figur 4 angedeuteten Ausschnitt A in vergrößerter Ansicht.
Hier ist deutlich der Übergang zwischen dem radial inneren Gehäuseteil 50 und dem radial äußeren Gehäuseteil 51 erkennbar. Weiterhin ist ersichtlich, dass der Strömungskanal 60, der in beiden Gehäuseteilen 50,51 ausgebildet ist und diese durchdringt, eine Querbohrung 62 umfasst, die den radial verlaufenden Abschnitt des Strömungskanals 60 im radial äußeren Gehäuseteil 51 mit dem radial verlaufenden Abschnitt des Strömungskanals 60 im radial inneren Gehäuseteil 50 verbindet. Zur Abdichtung dieser Querbohrung 62 ist im radial äußeren Gehäuseteil 51 eine Buchse 63 angeordnet. Zwischen dem radial inneren Gehäuseteil 50 und dem radial äußeren Gehäuseteil 51 ist ein erster O-Ring zur Abdichtung angeordnet. Zwischen der Buchse 63 und dem radial äußeren Gehäuseteil 51 ist ein zweiter O-Ring angeordnet, der eine abdichtende Wirkung zwischen der Buchse 63 und dem radial äußeren Gehäuseteil 51 sowie auch gegenüber dem radial inneren Gehäuseteil 50 entfaltet. Der Abschnitt des Strömungskanals 60, der im radial inneren Gehäuseteil 50 ausgebildet ist, mündet an der radialen Außenseite des radial inneren Gehäuseteils 50. Um diesen Abschnitt des Strömungskanals 60 zu verschließen ist ein Stopfen 64 angeordnet, der aufgrund elastischer Rückstellkräfte eine expandierende Wirkung hat und derart den Abschnitt des Strömungskanals 60 im radial inneren Gehäuseteil 50 an dessen radialer Außenseite verschließt.

Mit dem hier vorgeschlagenen Hybridmodul und der Hybrid-Einheit sowie dem Verfahren zur Montage des Hybridmoduls wird eine technische Lösung zur Verfügung gestellt, die flexibel eine achsparallele Anordnung eines Hybridmoduls in einen bestehenden Antriebsstrang mit geringstem Bauraum ermöglicht.

### Bezugszeichenliste

- 1: Hybridmodul
- 2: motorseitige Vormontagegruppe
- 3: Antriebswelle
- 4: getriebeseitige Vormontagegruppe
- 5: Getriebeeingangswelle
- 6: axiale Steckverzahnung
- 7: E-Maschine
- 8: Trennkupplung
- 9: dritte Vormontagegruppe
- 10: Kurbelwellengehäuse
- 11: Klimakompressor
- 21: Drehschwingungstilger
- 22: erster Lamellenkorb
- 24: Fliehkraftpendel
- 25: Bogenfeder
- 26: sekundärseitiges Blechbauteil
- 27: Nieten
- 28: Schraubenverbindung
- 30: Stützlager
- 41: Lamellenpaket
- 42: zweiter Lamellenkorb
- 43: Rad
- 44: Modulgehäuse
- 45: Zentralausrücker
- 46: Betätigungshebel
- 47: elastisches Haltemittel
- 48: Ausrücklager
- 50: radial inneres Gehäuseteil
- 51: radial äußeres Gehäuseteil
- 52: erster O-Ring
- 53: zweiter O-Ring
- 60: Strömungskanal
- 61: mechanische Befestigungseinrichtung
- 62: Querbohrung
- 63: Buchse
- 64: Stopfen
- 91: Dichtblech
- 92: Dichtring
- 93: Schraubenverbindung
- 100: erstes Zugmittel
- 101: zweites Zugmittel

## Patentansprüche

1. Hybridmodul, das aufweist:
eine erste motorseitige Vormontagegruppe (2);
eine zweite getriebeseitige Vormontagegruppe (4); und
eine zwischen der motorseitigen Vormontagegruppe (2) und der getriebeseitigen Vormontagegruppe (4) angeordnete Trennkupplung (8), über die die erste motorseitige Vormontagegruppe (2) und die zweite getriebeseitige Vormontagegruppe (4) drehmomentübertragend verbindbar sind,
**dadurch gekennzeichnet, dass**
die motorseitige Vormontagegruppe (2) aus einem Drehschwingungstilger (21) und einem ersten Lamellenkorb (22) ausgebildet ist, und
die getriebeseitige Vormontagegruppe (4) aus einem Lamellenpaket (41), einem zweiten Lamellenkorb (42), einem Rad (43), einem Zentralausrücker (45) und einem Modulgehäuse (44) ausgebildet ist.

2. Hybridmodul nach Anspruch 1, **dadurch gekennzeichnet, dass** der motorseitige erste Lamellenkorb (22) als ein Außenlamellenkorb und der getriebeseitige zweite Lamellenkorb (42) als ein Innenlamellenkorb ausgeführt ist.

3. Hybridmodul nach Anspruch 1 oder 2, **dadurch gekennzeichnet, dass** das Hybridmodul ein Stützlager (30) aufweist, und
der zweite Lamellenkorb (42) an dem Stützlager (30) gehäuseseitig gelagert ist und direkt mit einer getriebeseitigen Antriebswelle drehfest verbindbar ist.

4. Hybridmodul nach Anspruch 3, **dadurch gekennzeichnet, dass** das Modulgehäuse (44) ein radial inneres Gehäuseteil (50) und ein radial äußeres Gehäuseteil (51) umfasst, die mechanisch, insbesondere mittels mehrerer Schraubverbindungen, miteinander verbunden sind,
sich das radial innere Gehäuseteil (50) an dessen radialer Innenseite an dem Stützlager (30) abstützt und
das radial äußere Gehäuseteil (51) dazu eingerichtet ist, mittels wenigstens einer mechanischen Verbindung, insbesondere einer Schraubenverbindung (93), mit einer externen Einrichtung, wie zum Beispiel einem Kurbelwellengehäuse (10) der Verbrennungskraftmaschine, verbunden zu werden.

5. Hybridmodul nach Anspruch 4, **dadurch gekennzeichnet, dass** durch das radial äußere Gehäuseteil (51) und durch das radial innere Gehäuseteil (50) wenigstens ein Strömungskanal (60) ausgebildet ist, durch den ein Fluid einer von dem Hybridmodul umfassten Kupplungs-Betätigungseinrichtung, insbesondere einem Zentralausrücker (45), zwecks deren Betätigung zuführbar ist.

6. Hybridmodul nach einem der Ansprüche 1 bis 5, **dadurch gekennzeichnet, dass** der getriebeseitige zweite Lamellenkorb (42) das Rad (43) aufweist, über das die Anbindung einer E-Maschine (7) an den Antriebsstrang realisierbar ist.

7. Hybridmodul nach einem der Ansprüche 1 bis 6, **dadurch gekennzeichnet, dass** die Trennkupplung (8) als eine Lamellenkupplung ausgeführt ist.

8. Hybrid-Einheit, umfassend ein Hybridmodul gemäß einem der Ansprüche 1 bis 7 sowie achsparallel zu einer Drehachse des Hybridmoduls eine E-Maschine (7) und einen Klimakompressor (11), der mechanisch mit der E-Maschine (7) verbunden ist.

9. Hybrid-Einheit nach Anspruch 8, **dadurch gekennzeichnet, dass** die Hybrid-Einheit weiterhin eine Verbrennungskraftmaschine umfasst, welche ein Kurbelwellengehäuse (10) aufweist, und zur motorseitigen Abdichtung des Hybridmoduls ein an dem Kurbelwellengehäuse (10) zentriertes Dichtblech (91) mit einem Dichtring (92) vorgesehen ist.

10. Verfahren zur Montage eines Hybridmoduls, mit den folgenden Schritten:
- Bereitstellen einer ersten Vormontagegruppe mit einem Dichtblech (91) und einem Dichtring (92),
- Bereitstellen einer zweiten motorseitigen Vormontagegruppe (2) mit einem Drehschwingungstilger (21) und einem ersten Lamellenkorb (22),
- Bereitstellen einer dritten getriebeseitigen Vormontagegruppe (4) mit einem Lamellenpaket (41), einem zweiten Lamellenkorb (42), einem Rad (43), einem Zentralausrücker (45) und einem Modulgehäuse (44),
- Zentrieren der ersten Vormontagegruppe an einem Kurbelwellengehäuse,
- nach dem Zentrieren, Verbinden der zweiten motorseitigen Vormontagegruppe (2) mit einer Abtriebswelle eines Antriebsmotors, und
- nach dem Verbinden, axiales Stecken der dritten getriebeseitigen Vormontagegruppe (4) auf die zweite Vormontagegruppe (2) und Verbinden der dritten getriebeseitigen Vormontagegruppe (4) mit der ersten Vormontagegruppe.

## Claims

1. A hybrid module having:
a first, motor-side pre-assembly group (2);
a second, transmission-side pre-assembly group (4); and
a separating clutch (8) arranged between the motor-side pre-assembly group (2) and the transmission-side pre-assembly group (4), via which the first, motor-side pre-assembly group (2) and the second, transmission-side pre-assembly group (4) can be connected in a torque-transmitting manner,
**characterized in that**
the motor-side pre-assembly group (2) is formed from a torsional vibration damper (21) and a first plate cage (22), and
the transmission-side pre-assembly group (4) is formed from a plate stack (41), a second plate cage (42), a wheel (43), a central release mechanism (45) and a module housing (44).

2. The hybrid module according to claim 1, **characterized in that** the first, motor-side plate cage (22) is designed as an outer plate cage and the second, transmission-side plate cage (42) is designed as an inner plate cage.

3. The hybrid module according to claim 1 or 2, **characterized in that** the hybrid module has a support bearing (30), and
the second plate cage (42) is mounted on the support bearing (30) on the housing side and can be connected directly in a non-rotatable manner to a drive shaft on the transmission side.

4. The hybrid module according to claim 3, **characterized in that** the module housing (44) comprises a radially inner housing part (50) and a radially outer housing part (51) which are mechanically connected to one another, in particular by means of a plurality of screw connections,
the radially inner housing part (50) is supported on its radially inner side on the support bearing (30), and
the radially outer housing part (51) is designed to be connected to an external device, such as a crankshaft housing (10) of the internal combustion engine, by means of at least one mechanical connection, in particular a screw connection (93).

5. The hybrid module according to claim 4, **characterized in that** at least one flow channel (60) is formed by the radially outer housing part (51) and by the radially inner housing part (50), through which a fluid can be fed to a clutch actuation device comprised by the hybrid module, in particular a central release mechanism (45), for the purpose of actuating the same.

6. The hybrid module according to one of claims 1 to 5, **characterized in that** the second, transmission-side plate cage (42) has the wheel (43) via which the connection of an electric machine (7) to the drive train can be implemented.

7. The hybrid module according to one of claims 1 to 6, **characterized in that** the separating clutch (8) is designed as a multi-plate clutch.

8. A hybrid unit, comprising a hybrid module according to one of claims 1 to 7 and, axially parallel to an axis of rotation of the hybrid module, an electric machine (7) and an air-conditioning compressor (11) which is mechanically connected to the electric machine (7).

9. The hybrid unit according to claim 8, **characterized in that** the hybrid unit further comprises an internal combustion engine which has a crankshaft housing (10), and a sealing plate (91) centred on the crankshaft housing (10) with a sealing ring (92) is provided for motor-side sealing of the hybrid module.

10. A method for assembling a hybrid module, having the following steps:
- providing a first pre-assembly group with a sealing plate (91) and a sealing ring (92),
- providing a second, motor-side pre-assembly group (2) with a torsional vibration damper (21) and a first plate cage (22),
- providing a third, transmission-side pre-assembly group (4) with a plate stack (41), a second plate cage (42), a wheel (43), a central release mechanism (45) and a module housing (44),
- centring the first pre-assembly group on a crankshaft housing,
- after centring, connecting the second, motor-side pre-assembly group (2) to an output shaft of a drive motor, and
- after connecting, axially plugging the third, transmission-side pre-assembly group (4) onto the second pre-assembly group (2) and connecting the third, transmission-side pre-assembly group (4) to the first pre-assembly group.

## Revendications

1. Module hybride, lequel comprend :
un premier groupe de pré-montage (2) côté moteur ;
un deuxième groupe de pré-montage (4) côté transmission ; et
un embrayage de séparation (8) disposé entre le groupe de pré-montage (2) côté moteur et le groupe de pré-montage (4) côté transmission, au moyen duquel le premier groupe de pré-montage (2) côté moteur et le deuxième groupe de pré-montage (4) côté transmission peuvent être raccordés d'une manière transmettant le couple,
**caractérisé en ce que**
le groupe de pré-montage (2) côté moteur est formé d'un amortisseur de vibrations de torsion (21) et d'un premier panier à lamelles (22) et
le groupe de pré-montage (4) côté transmission est formé d'un paquet de lamelles (41), d'un second panier à lamelles (42), d'une roue (43), d'un débrayeur central (45) et d'un boîtier de module (44).

2. Module hybride selon la revendication 1, **caractérisé en ce que** le premier panier à lamelles (22) côté moteur est conçu sous la forme d'un panier à lamelles extérieures et le second panier à lamelles (42) côté transmission est conçu sous la forme d'un panier à lamelles intérieures.

3. Module hybride selon la revendication 1 ou 2, **caractérisé en ce que** le module hybride comprend un palier d'appui (30) et
le second panier à lamelles (42) est monté côté boîtier sur le palier d'appui (30) et peut être raccordé directement à un arbre d'entraînement côté transmission de manière fixe en rotation.

4. Module hybride selon la revendication 3, **caractérisé en ce que** le boîtier de module (44) comprend une partie de boîtier (50) radialement interne et une partie de boîtier (51) radialement externe, lesquelles sont raccordées l'une à l'autre mécaniquement, en particulier au moyen de plusieurs raccords à vis,
la partie de boîtier (50) radialement interne s'appuie sur sa face radialement intérieure sur le palier d'appui (30) et
la partie de boîtier (51) radialement externe est conçue pour être raccordée, au moyen d'au moins une liaison mécanique, en particulier un raccord à vis (93), à un dispositif externe, tel que, par exemple, un carter de vilebrequin (10) du moteur à combustion interne.

5. Module hybride selon la revendication 4, **caractérisé en ce qu'**au moins un canal d'écoulement (60) est formé à travers la partie de boîtier (51) radialement externe et à travers la partie de boîtier (50) radialement interne, à travers lequel un fluide d'un dispositif d'actionnement d'embrayage compris dans le module hybride, en particulier un débrayeur central (45), peut être acheminé pour l'actionnement de celui-ci.

6. Module hybride selon l'une quelconque des revendications 1 à 5, **caractérisé en ce que** le second panier à lamelles (42) côté transmission comporte la roue (43) au moyen de laquelle peut être réalisée la fixation d'une machine électrique (7) à la chaîne cinématique.

7. Module hybride selon l'une quelconque des revendications 1 à 6, **caractérisé en ce que** l'embrayage de séparation (8) est conçu sous la forme d'un embrayage à lamelles.

8. Unité hybride, comprenant un module hybride selon l'une quelconque des revendications 1 à 7 ainsi qu'axialement parallèle à un axe de rotation du module hybride, une machine électrique (7) et un compresseur de climatisation (11), lequel est raccordé mécaniquement à la machine électrique (7).

9. Unité hybride selon la revendication 8, **caractérisée en ce que** l'unité hybride comprend en outre un moteur à combustion interne, lequel comporte un carter de vilebrequin (10) et lequel, pour étanchéifier côté moteur le module hybride, est pourvu d'une tôle d'étanchéité (91) centrée sur le carter de vilebrequin (10) dotée d'une bague d'étanchéité (92).

10. Procédé de montage d'un module hybride, comprenant les étapes suivantes, à savoir :
- la fourniture d'un premier groupe de pré-montage comportant une tôle d'étanchéité (91) et une bague d'étanchéité (92),
- la fourniture d'un deuxième groupe de pré-montage (2) côté moteur comportant un amortisseur de vibrations de torsion (21) et un premier panier à lamelles (22),
- la fourniture d'un troisième groupe de pré-montage (4) côté transmission comportant un paquet de lamelles (41), un second panier à lamelles (42), une roue (43), un débrayeur central (45) et un boîtier de module (44),
- le centrage du premier groupe de pré-montage sur un carter de vilebrequin,
- le raccordement, après le centrage, du deuxième groupe de pré-montage (2) côté moteur à un arbre de sortie d'un moteur d'entraînement, et
- le branchement axial, après le raccordement, du troisième groupe de pré-montage (4) côté transmission sur le deuxième groupe de pré-assemblage (2) et le raccordement du troisième groupe de pré-assemblage (4) côté transmission au premier groupe de pré-assemblage.
